# EUROPÄISCHE PATENTSCHRIFT

(11) **EP 1 721 420 B1**
(45) Veröffentlichungstag und Bekanntmachung des Hinweises auf die Patenterteilung: **04.05.2011**
(21) Anmeldenummer: 05707909.7
(22) Anmeldetag: 01.02.2005
(51) Int. Cl.: H04L 12/40

(54) **VERFAHREN UND KOMMUNIKATIONSSYSTEM ZUR ÜBERTRAGUNG VON INFORMATIONEN IN EINEM KRAFTFAHRZEUG**
METHOD AND COMMUNICATION SYSTEM FOR THE TRANSMISSION OF DATA IN A MOTOR VEHICLE
PROCEDE ET SYSTEME DE COMMUNICATION POUR TRANSMETTRE DES INFORMATIONS DANS UN VEHICULE A MOTEUR

(30) Priorität: 24.02.2004 DE 102004008910
(43) Veröffentlichungstag der Anmeldung: 15.11.2006
(73) Patentinhaber: ROBERT BOSCH GMBH, 70442 Stuttgart (DE)
(72) Erfinder: ENDERS, Thorsten, 75428 Illingen (DE); FUEHRER, Thomas, 70839 Gerlingen (DE); HUGEL, Robert, 76199 Karlsruhe (DE); SCHIRMER, Juergen, 69124 Heidelberg (DE); KRAFT, Dieter, 70839 Gerlingen (DE); STIEGLER, Frank, 71636 Ludwigsburg (DE)
(86) Internationale Anmeldenummer: PCT/EP2005/050435
(87) Internationale Veröffentlichungsnummer: WO 2005/081463

(56) Entgegenhaltungen:
- WO-A-03/036877
- B. MÜLLER, T. FÜHRER, F. HARTWICH, R. HUGEL, H. WEILER, ROBERT BOSCH GMBH: "Fault Tolerant TTCAN Networks" PROCEEDINGS ICC 2002, 8TH INTERNATIONAL CAN CONFERENCE, [Online] 26. Februar 2002 (2002-02-26), XP002331424 LAS VEGAS, NEVADA Gefunden im Internet: URL:http://www.semiconductors.bosch.de/de/ 20/can/3-literature.asp> [gefunden am 2005-06-09]
- THOMAS DOHMKE: "Bussysteme im Automobil CAN, FlexRay und MOST" TECHNISCHE UNIVERSITÄT BERLIN, [Online] März 2002 (2002-03), Seiten 1-22, XP002331425 Gefunden im Internet: URL:http://thomas.dohmke.de/de/projekte/bu ssysteme> [gefunden am 2005-06-09]

## Beschreibung

### Stand der Technik

Die vorliegende Erfindung betrifft ein Verfahren zur Übertragung von Informationen in einem Kraftfahrzeug zwischen elektrischen Komponenten des Kraftfahrzeugs. Die Komponenten sind zur Informationsübertragung an eine Datenbusstruktur des Kraftfahrzeugs und zur Energieversorgung an eine Versorgungsleitungsstruktur des Kraftfahrzeugs angeschlossen. Die Informationen werden in aufeinanderfolgenden Zyklen über die Datenbusstruktur übertragen. Jeder Zyklus umfasst mindestens ein Zeitfenster zur Informationsübertragung zu bestimmten Zeitpunkten und mindestens ein Ereignisfenster zur Informationsübertragung zu bestimmten Ereignissen.

Außerdem betrifft die Erfindung ein Verfahren zur Übertragung von Informationen in einem Kraftfahrzeug zwischen elektrischen Komponenten des Kraftfahrzeugs, bei dem die Informationen zur redundanten Informationsübertragung zumindest teilweise sowohl über die Datenbusstruktur als auch über die Versorgungsleitungsstruktur übertragen werden.

Des Weiteren betrifft die vorliegende Erfindung ein Kommunikationssystem für ein Kraftfahrzeug. Das Kommunikationssystem umfasst mehrere elektrische Komponenten, eine Datenbusstruktur, an welche die Komponenten zur Informationsübertragung zwischen den Komponenten angeschlossen sind, und eine Energieversorgungsstruktur, an welche die Komponenten zur Energieversorgung angeschlossen sind. Die Informationsübertragung erfolgt über die Datenbusstruktur in aufeinanderfolgenden Zyklen, wobei jeder Zyklus mindestens ein Zeitfenster zur Informationsübertragung zu bestimmten Zeitpunkten und mindestens ein Ereignisfenster zur Informationsübertragung zu bestimmten Ereignissen umfasst.

Schließlich betrifft die Erfindung auch ein Kommunikationssystem für ein Kraftfahrzeug. Das Kommunikationssystem umfasst mehrere elektrische Komponenten, eine Datenbusstruktur, an welche die Komponenten zur Informationsübertragung zwischen den Komponenten angeschlossen sind, und eine Energieversorgungsstruktur, an welche die Komponenten zur Energieversorgung angeschlossen sind. Dei dem Kommunikationssystem erfolgt die Informationsübertragung zumindest teilweise sowohl über die Datenbusstruktur als auch über die Versorgungsleitungsstruktur.

In Kraftfahrzeugen werden in zunehmendem Maße elektrische Komponenten eingesetzt, die über eine Datenbusstruktur zur Informationsübertragung miteinander in Verbindung stehen. Zur Energieversorgung sind die elektrischen Komponenten an eine Energieversorgungsleitungsstruktur angeschlossen. Bei den elektrischen Komponenten handelt es sich beispielsweise um Sensoren, Aktoren und/oder Steuergeräte. Des weiteren werden in Kraftfahrzeugen in zunehmendem Maße auch solche Funktionen elektrisch realisiert, die bisher aus Sicherheitsgründen oder aus anderen Gründen zumindest zum Teil mechanisch realisiert waren. Wurden beispielsweise früher noch die Befehle von einem Gaspedal über einen Bowdenzug an eine Drosselklappe oder an ein Steuergerät der Brennkraftmaschine übermittelt, ist diese Funktion heutzutage in der Regel elektronisch ausgebildet, wobei ein Sensor die Stellung des Gaspedals aufnimmt, ein Wandler die Sensorsignale in entsprechende elektrische Signale umwandelt, die dann über eine Datenleitung an die Drosselklappe oder das Steuergerät der Brennkraftmaschine übertragen und dort weiter verarbeitet werden. Von dem Steuergerät werden die Ansteuersignale an ein Kraftstoffeinspritsystem und/oder an Gaswechselventile (Einlass-/Auslassventile) der Brennkraftmaschine weitergeleitet. Die eigentliche Ansteuerung der Drosselklappe, des Einspritzsystems und/oder der Gaswechselventile erfolgt über geeignete Aktoren, die mittels der Ansteuersignale angesteuert werden (sogenanntes Throttle-By-Wire). Auf ähnliche Weise funktionieren sämtliche sogenannten X-By-Wire-Funktionen in einem Kraftfahrzeug, zum Beispiel Brake-By-Wire, Steer-By-Wire, Shift-By-Wire, etc., bei denen bisher zumindest teilweise mechanisch realisierte Funktionen ausschließlich elektrisch realisiert werden.

Um den Verkabelungsaufwand zwischen den einzelnen elektrischen Komponenten in dem Kraftfahrzeug möglichst gering zu halten, sind die elektrischen Komponenten in der Regel über Datenbusstrukturen miteinander vernetzt, über die Informationen, beispielsweise Messsignale, Ansteuersignale, Zustandsinformationen etc., nach bestimmten Kommunikationsprotokollen übertragen werden können. Durch die zunehmende Abkehr von der mechanischen Realisierung von Kraftfahrzeugfunktionen nimmt zum einen die Menge der in den Kraftfahrzeugkommunikationssystemen zu übertragenden Informationen stark zu, und zum anderen steigen auch die Anforderung an die Sicherheit der Informationsübertragung über die Datenbusstruktur.

Ein wichtiger Sicherheitsaspekt bei der Informationsübertragung in einem Kraftfahrzeug ist zum einen, dass die Informationen auf jeden Fall über die Datenbusstruktur übertragen werden und ihren Empfänger auf jeden Fall erreichen und nicht, beispielsweise aufgrund einer Überlastung oder eines Defekts der Datenbusstruktur, verloren gehen oder an den falschen Empfänger gelangen. Um dieser Sicherheitsanforderung Rechnung zu tragen, sind Kommunikationssysteme für Kraftfahrzeuge bekannt, bei denen die Informationen nicht nur über die Datenbusstruktur, sondern redundant auch über die Versorgungsleitungsstruktur übertragen werden. Die Informationsübertragung über die Versorgungsleitungsstruktur wird auch als Power-Line-Communications (PLC) bezeichnet. Der Aufbau und die Funktionsweise solcher Kommunikationssysteme, die Topologie und die erforderliche Konditionierung der Versorgungsleitungsstruktur sind in den Druckschriften DE 101 42 408 A1, DE 101 42 409 A1 und DE 101 42 410 A1 beschrieben.

Zum anderen ist es ein wichtiger Sicherheitsaspekt, dass die übertragenen Informationen nicht nur mit Sicherheit an den richtigen Empfänger gelangen, sondern diesen auch innerhalb einer vorgebbaren Übertragungszeit erreichen. Um diese Sicherheitsanforderung erfüllen zu können, sind in der Vergangenheit eine Vielzahl verschiedener Kommunikationsprotokolle entwickelt worden, von denen einige nachfolgend kurz erläutert werden.

Ein solches Kommunikationsprotokoll zur Übertragung von Informationen im Rahmen von sicherheitsrelevanten Anwendungen ist beispielsweise das sogenannte Time Triggered Controller Area Network (TTCAN)-Protokoll. Das TTCAN-Protokoll basiert auf der sogenannten Controller Area Network (CAN)-Datenübertragungsschicht, die in ISO 11898-1 spezifiziert ist. Das TTCAN-Protokoll kann die standardisierten CAN physikalischen Schichten nutzen, wie sie für Hochgeschwindigkeits-Sende-/Empfangs-Einheiten in ISO 11898-2 und für fehlertolerante Niedriggeschwindigkeits-Sende-/Empfangs-Einheiten in ISO 11898-3 spezifiziert sind. Das TTCAN-Protokoll stellt Mechanismen zur Verfügung, um Nachrichten sowohl zeitgesteuert als auch ereignisgesteuert übertragen zu können. Dadurch können CANbasierte Netzwerke in sicherheitsrelevanten Umgebungen (zum Beispiel in einem geschlossenen Regelkreis) eingesetzt werden. Ein anderer Vorteil des TTCAN-Protokolls ist die Verbesserung des Echtzeitverhaltens in CAN-basierten Netzwerken.

Die ISO (International Standardization Organisation) hat das TTCAN-Protokoll in ISO 11898-4 spezifiziert. In dieser Spezifikation gibt es in einem Kommunikationszyklus (Basic Cycle) drei verschiedene Arten von Zeitrahmen, innerhalb denen Nachrichten übertragen werden können: Ausschließliche Zeitfenster (sogenannte Exclusive Time Windows), vermittelnde Zeitfenster (sogenannte Arbitrating Time Windows) und freie Zeitfenster (sogenannte Free Time Windows). In den vermittelnden Zeitfenstern können mehrere Botschaften um den Zugang auf die Datenbusstruktur streiten. Die ausschließlichen Zeitfenster sind einer bestimmten Botschaft zugeordnet, die periodisch ohne Konkurrenz um die Zugriffsrechte auf die Datenbusstruktur übertragen wird. Die ausschließlichen Zeitfenster entsprechen also den Zeitfenstern im Sinne der vorliegenden Erfindung.

Um die zeitgesteuerte Kommunikation unterstützen zu können, verfügen alle Komponenten (Netzwerkknoten) über eine gemeinsame Zeitbasis verfügen, die entweder durch einen internen oder einen externen Zeitgeber zur Verfügung gestellt wird. Eine CAN-typische ereignisgesteuerte Informationsübertragung ist in den vermittelnden Zeitfenstern möglich. Diese entsprechen also den Ereignisfenstern gemäß der Erfindung. Durch die freien Zeitfenster ist auf relativ einfache Weise eine nachträgliche Erweiterung des Kommunikationssystems möglich. Ein Zyklus zur Informationsübertragung beginnt mit einer Referenznachricht, welche eine Synchronisation der Komponenten bewirkt. Die CAN-typische automatische Übertragungswiederholung von Nachrichten, die nicht erfolgreich übermittelt werden konnten, ist deaktiviert.

Gemäß dem TTCAN-Protokoll werden Informationen also in sich periodisch wiederholenden Zyklen übertragen, wobei jeder Zyklus mindestens ein Zeitfenster (Exclusive Time Window) aufweist, in dem festgelegte Nachrichten zu bestimmten Zeitpunkten innerhalb des Zyklus übertragen werden können. Darüber hinaus umfasst jeder Zyklus mindestens ein Ereignisfenster (Arbitrating Time Window), das für eine ereignisgesteuerte Informationsübertragung eingesetzt werden kann. Bei dem TTCAN-Protokoll wird also in den zeitgesteuerten Ansatz zur Datenübertragung des CAN ein ereignisgesteuerter Ansatz integriert. Dadurch kann erreicht werden, dass sich die in der TTCAN-Datenbusstruktur verwendete Kommunikation deterministisch verhält, das heißt, dass über die Sendezeit einer Nachricht eine Aussage getroffen werden kann. Das TTCAN-Protokoll eignet sich daher sehr gut für den Einsatz in sicherheitsrelevanten Systemen. Weitere Informationen über das TTCAN-Protokoll können einer Vielzahl von Veröffentlichungen entnommen werden, beispielsweise dem Internet unter http://212.114.78.132/can/ttcan/ mit Veröffentlichungen von Führer, T. et al.: Time-Triggered Communication on CAN, von Hartwich, F. et al.: CAN Network With Time-Triggered Communication, und von Fonseca, J. et al.: Scheduling For a TTCAN Network With a Stochastic Optimization Algorithm.

Ein weiteres Kommunikationsprotokoll, das für den Einsatz in sicherheitsrelevanten Umgebungen geeignet ist, ist das FlexRay-Protokoll. Bei der Entwicklung von FleyRay standen bei den Anforderungen vor allem eine hohe Datenübertragungsrate, eine deterministische Kommunikation, eine hohe Fehlertoleranz und Flexibilität im Vordergrund. Bei dem FlexRay-Protokoll erfolgt die Informationsübertragung in aufeinander folgenden Kommunikationszyklen. In den elektrischen Komponenten (Netzwerkknoten) ist ein gemeinsames Zeitverständnis vorhanden, wobei die Komponenten durch Referenznachrichten (sogenannte SYNC-Nachrichtn) innerhalb eines Zyklus synchronisiert werden. Um sowohl eine synchrone als auch eine asynchrone Nachrichtenübertragung zu ermöglichen, ist der Kommunikationszyklus in einen statischen Teil (static segment) und in einen dynamischen Teil (dynamic segment) unterteilt, die jeweils mindestens ein Fenster (Slot oder Timeslot) zur Informationsübertragung aufweisen.

Die Slots des statischen Teils sind bestimmten Nachrichten zugewiesen, die periodisch ohne Wettbewerb um die Zugriffsrechte auf die FlexRay-Datenbusstruktur zu bestimmten Zeitpunkten übertragen werden. Insofern entsprechen die Slots des statischen Teils den Zeitfenstern im Sinne der vorliegenden Erfindung. In den Slots des dynamischen Teils kann eine ereignisgesteuerte Informationsübertragung realisiert werden. Insofern entsprechen die Slots des dynamischen Teils den Ereignisfenstern im Sinne der vorliegenden Erfindung.

Während im statischen Teil des Zyklus nach dem Time Division Multiple Access (TDMA)-Verfahren auf die FlexRay-Datenbusstruktur zugegriffen wird, wird während des dynamischen Teils des Zyklus nach dem sogenannten Flexible Time Division Multiple Access (FTDMA)-Verfahren auf die Busstruktur zugegriffen. Zum Zugriff auf die Datenbusstruktur während des dynamischen Segments des Zyklus wird ein sogenanntes Minislotting-Verfahren eingesetzt. Für das FlexRay-Protokoll gibt es derzeit noch keine Norm, beispielsweise durch die ISO. Hier eventuell beschriebene Einzelheiten des Protokolls könnten sich in Zukunft also noch ändern. Weitere Informationen über das FlexRay-Protokoll können dem Internet unter http://www.flexray.de entnommen werden, wo unter anderem eine Vielzahl von Veröffentlichungen für jedermann zugänglich abgelegt sind.

Ein weiteres Kommunikationsprotokoll, das für sicherheitsrelevante Umgebungen geeignet ist, ist das Time-Triggered Communication Protocol (TTP), insbesondere die Version C (TTP/C) dieses Protokolls. Bei TTP werden Informationen in aufeinander folgenden Zyklen (Rounds) übertragen. Jeder Zyklus umfasst mehrere Fenster (Slots) zur Informationsübertragung. Ein Teil der Fenster dient zur garantierten, deterministischen Übertragung von Echtzeit-Daten. Dieser Teil der Fenster (Slot for State Data) entspricht den Zeitfenstern im Sinne der vorliegenden Erfindung. Darüber hinaus ist ein Teil des Fensters zur ereignisgesteuerten Informationsübertragung reserviert, wobei die ereignisgesteuerten Nachrichten huckepack auf TTP-Datenrahmen übertragen werden. Dieser Teil der Fenster (Slot for Event Data) entspricht den Ereignisfenstern im Sinne der vorliegenden Erfindung. Weitere Informationen können beispielsweise im Internet der Homepage der Firma TTTech Computertechnik AG, Wien, Österreich unter http://www.tttech.com/technology/articles.htm entnommen werden, wo eine Vielzahl an Veröffentlichungen zum Thema TTP für jedermann zugänglich abgelegt sind.

Im Rahmen des sogenannten DISCO (Distributed Embeddable Systems for Control Applications)-Projekts wurde an der Universität von Aveiro, Portugal ein neues MAC (Medium Access Control)-Protokoll entwickelt und als FTT-CAN (Flexible Time-Triggered Controler Area Network)-Protokoll bezeichnet. Auch das FTT-CAN Protokoll ist für den Einsatz in sicherheitsrelevanten Umgebungen geeignet. Das FTT-CAN-Protokoll ist dem TTCAN-Protokoll sehr ähnlich und unterscheidet sich von diesem im Wesentlichen durch die Art der Ablaufkoordination (sogenanntes Scheduling) der Informationsübertragung. Auch gemäß dem FTT-CAN-Protokoll werden die Informationen in aufeinanderfolgenden Zyklen übertragen, wobei jeder Zyklus Zeitfenster zur zeitgesteuerten Informationsübertragung und Ereignisfenster zur ereignisgesteuerten Informationsübertragung umfasst. Das DISCO-Projekt umfasst verschiedene portugiesische Forschungsinstitute, unter anderem das Instituto de Engenharia Elektronica e Telematica de Aveiro (IEETA) der Universidade de Aveiro, Portugal. Nähere Informationen über das FTT-CAN-Protokoll können dem Internet, insbesondere der Veröffentlichung Fonseca, J. A. et al.: DISCO-DIStributed Embeddable Systems for COntrol Applications: Project Overview, unter http://www.ieeta.pt/∼jaf/papers/ano2001/ DISCO.pdf, entnommen werden.

Ein weiteres Kommunikationsprotokoll für den Einsatz in sicherheitsrelevanten Umgebungen ist das Media Oriented Systems Transport (MOST)-Protokoll, bei dem Informationen ebenfalls in aufeinanderfolgenden Zyklen (Frames) übertragen werden. Jeder Zyklus umfasst Zeitfenster (Synchronous Area) zur zeitgesteuerten Informationsübertragung und Ereignisfenster (Asynchronous Area) zur ereignisgesteuerten Informationsübertragung. Weitere Informationen zu dem MOST-Protokoll können dem Internet, beispielsweise unter http://www.mostcooperation.com, entnommen werden, wo für jedermann zugänglich die MOST-Technologie ausführlich erläutert ist und eine Vielzahl von Veröffentlichungen zum Thema MOST-Protokoll abgelegt sind.

Außer den oben ausdrücklich genannten und kurz beschriebenen Kommunikationsprotokollen für den Einsatz in sicherheitsrelevanten Umgebungen gibt es noch andere oder wird es in Zukunft noch andere Kommunikationsprotokolle geben, bei denen die Informationsübertragung in aufeinanderfolgenden Zyklen erfolgt, wobei jeder Zyklus Zeitfenster zur zeitgesteuerten Informationsübertragung und Ereignisfenster zur ereignisgesteuerten Informationsübertragung umfasst, die also ebenfalls für den Einsatz in sicherheitsrelevanten Systemen geeignet sind.

Diesen Kommunikationsprotokollen gemeinsam ist die Art der Informationsübertragung, bei der in den Ereignisfenstern beispielsweise Informationen übertragen werden, die zu unvorhersehbaren Zeitpunkten auftreten. Derartige Informationen sind beispielsweise Sensormesssignale, Alarm- oder Fehlermeldungen eines Steuergeräts, manuell auslösbare Signale (Signale zur Ansteuerung von Komfortfunktionen im Kraftfahrzeug), etc. Sicherheitsrelevante und zeitkritische Informationen werden dagegen in der Regel in den Zeitfenstern der Zyklen übertragen. Auf diese Weise kann sichergestellt werden, dass die übertragenen Informationen innerhalb einer vorgebbaren Übertragungszeit auch tatsächlich zu dem Empfänger übertragen und von diesem empfangen werden. Aus diesem Grund ist es in den Kommunikationsprotokollen für sicherheitsrelevante Anwendungen besonders wichtig, dass gerade die in Zeitfenstern übertragenen Informationen auch tatsächlich beim Empfänger ankommen. Ein Defekt der Datenbusstruktur, durch den eine Informationsübertragung beeinträchtigt oder gar gänzlich verhindert werden könnte, hätte fatale Folgen für die Sicherheit innerhalb der sicherheitsrelevanten Anwendungen.

Deshalb wird ein relativ hoher Aufwand getrieben, um trotz Beschädigung oder Ausfall einer Datenbusstruktur dennoch eine Informationsübertragung zwischen den an die Datenbusstruktur angeschlossenen Komponenten zu ermöglichen. Denkbar wäre beispielsweise eine mehrfach redundante Ausbildung der Datenbusstruktur. Das ist jedoch sehr aufwändig und teuer, da zusätzliche Datenbusstrukturen sowie zusätzliche Sende-/Empfangseinheiten zum Anschluss der Komponenten an die zusätzlichen Datenbusstrukturen vorgesehen werden müssen. Ein weiterer Nachteil, der insbesondere bei Kraftfahrzeugen zum Tragen kommt, ist der zusätzliche Platzbedarf für die zusätzlichen Datenbusstrukturen sowie für die zusätzlichen Sende-/ Empfangseinheiten der Komponenten. Dieser zusätzlich erforderliche Platz steht in Kraftfahrzeugen entweder nicht zur Verfügung oder könnte besser den Insassen des Kraftfahrzeugs durch Vergrößerung des Innenraums oder des Gepäckraums zur Verfügung gestellt werden.

In der Veröffentlichung "Fault Tolerant TTCAN Networks" (B. Müller et al.), PROCEEDINGS ICC 2002, 8TH INTERNATIONAL CAN CONFERENCE, XP002331424 Las Vegas, Nevada, werden fehlertolerante TTCAN-Netzwerke beschrieben. Dazu wird insbesondere ein gekoppeltes Paar von TTCAN-Bussen als redundantes Netzwerk vorgeschlagen.

Aus der WO 03/036877 A2 ist ein Verfahren zur Steuerung mehrerer in einem Netzwerk miteinander vernetzter Einheiten sowie ein Netzwerk aus mehreren miteinander vernetzten Einheiten bekannt. Dabei wird vorgeschlagen, die Einheiten über Versorgungsleitungen an eine zentrale Spannungswelle anzuschließen und die Versorgungsleitungen auch zur Datenübertragung zu nutzen.

Ausgehend von dem beschriebenen Stand der Technik liegt der vorliegenden Erfindung die Aufgabe zugrunde, eine einfache, kostengünstige und platzsparende Möglichkeit für eine redundante Informationsübertragung in einem Kommunikationssystem für ein Kraftfahrzeug unter Berücksichtigung der besonderen Anforderungen an die Informationsübertragung im Rahmen von sicherheitsrelevanten Anwendungen zur Verfügung zu stellen.

Zur Lösung dieser Aufgabe wird ausgehend von dem Verfahren zur Informationsübertragung gemäß dem Oberbegriff des Patentanspruchs 1 vorgeschlagen, dass lediglich die in dem mindestens einen zeitlich bestimmten Zeitfenster über die Datenbusstruktur übertragenen Informationen zur redundanten Informationsübertragung zumindest teilweise auch über die Versorgungsleitungsstruktur übertragen werden.

### Vorteile der Erfindung

Erfindungsgemäß wird also vorgeschlagen, zusätzlich zu der Datenbusstruktur auch die Versorgungsleitungsstruktur des Kraftfahrzeugs, welche die Komponenten der Datenbusstruktur mit Energie versorgt, zur redundanten Informationsübertragung einzusetzen. Um die Menge der über die Versorgungsleitungsstruktur zu übertragenden Informationen möglichst gering halten zu können, müssen jedoch nicht alle über die Datenbusstruktur übertragenen Informationen auch über die Versorgungsleitungsstruktur übertragen werden, sondern lediglich die sicherheitsrelevanten und/oder zeitkritischen Informationen, die in der Regel in den Zeitfenstern der Übertragungszyklen über die Datenbusstruktur übertragen werden.

Auf der Versorgungsleitungsstruktur sind Störungen vorhanden, die zu Beeinträchtigungen der Datenübertragung führen können. Es ist zwar beispielsweise durch eine entsprechende Konditionierung der Versorgungsleitungsstruktur und/ oder durch entsprechende Maßnahmen in den elektrischen Komponenten bzw. den Transceivern der Komponenten möglich, auch über eine Versorgungsleitungsstruktur sehr hohe Datenübertragungsraten zu erzielen. Derzeit sind Datenraten von bis zu 10 Mbaud über die Versorgungsleitungsstruktur erzielbar. Häufig reicht es jedoch schon aus, in einem Kraftfahrzeug eine einfach und kostengünstig ausgestaltete Rückfallebene für die Datenübertragung im Falle eines Ausfalls der Datenbusstruktur zur Verfügung zu haben, um beispielsweise einen Notlaufbetrieb sicherzustellen. Dazu kann es ausreichend sein, wenn nur ein Teil der über die Datenbusstruktur übertragenen Daten über die Versorgungsleitungsstruktur übertragen wird. Eine derart geringe Datenübertragungsrate über die Versorgungsleitungsstruktur kann bereits mit einfachen Mitteln, das heißt beispielsweise mit wenig konditionierten Versorgungsnetzen und mit einem geringen Aufwand in den Transceivern, erzielt werden. Erfindungsgemäß wird also die Möglichkeit einer einfach aufgebauten und kostengünstigen Rückfallebene für die Datenübertragung über die Versorgungsleitungsstruktur geschaffen.

Erfindungsgemäß müssen nicht alle über die Datenbusstruktur in den Zeitfenstern übertragenen Informationen auch über die Versorgungsleitungsstruktur übertragen werden. Vielmehr ist es auch denkbar, dass lediglich ein Teil der in den Zeitfenstern übertragenen Informationen redundant auch über die Versorgungsleitungsstruktur übertragen wird. Die über die Datenbusstruktur in den Ereignisfenstern übertragenen Informationen werden auf jeden Fall nicht redundant über die Versorgungsleitungsstruktur übertragen. Es ist aber nicht ausgeschlossen, dass für diese Informationen eine andere Art der redundanten Datenübertragung vorgesehen wird.

Ein Kommunikationssystem zur Realisierung des erfindungsgemäßen Verfahrens zur Informationsübertragung ist besonders einfach und kostengünstig realisierbar. Zudem wird kein zusätzlicher Einbauplatz für eine zusätzliche redundante Datenbusstruktur benötigt, da die Komponenten sowieso über die Datenbusstruktur und die Versorgungsleitungsstruktur miteinander in Verbindung stehen. Lediglich zusätzliche Sende-/Empfangseinheiten zum Anschluss der Komponenten an die Versorgungsleitungsstruktur für eine Informationsübertragung sind erforderlich.

Gemäß einer vorteilhaften Weiterbildung der vorliegenden Erfindung werden die Informationen über die Datenbusstruktur nach dem Time-Triggered Controller Area Network (TTCAN)-Protokoll übertragen. Bei dem TTCAN-Protokoll werden die Zeitfenster als "Exclusive Windows" und die Ereignisfenster als "Arbitrating Windows" bezeichnet. Erfindungsgemäß werden also die nach dem TTCAN-Protokoll in den "Exclusive Windows" über die Datenbusstruktur übertragenen Informationen zur redundanten Informationsübertragung zumindest teilweise auch über die Versorgungsleitungsstruktur übertragen.

Gemäß einer weiteren bevorzugten Ausführungsform der vorliegenden Erfindung wird vorgeschlagen, dass die Informationen über die Datenbusstruktur nach dem FlexRay-Protokoll übertragen werden. Im FlexRay-Protokoll sind die Zeitfenster als "statische Segmente" und die Ereignisfenster als "dynamische Segmente" des Kommunikationszyklus bezeichnet. Erfindungsgemäß werden also die nach dem FlexRay-Protokoll in den "statischen Segmenten" über die Datenbusstruktur übertragenen Informationen zumindest teilweise auch über die Versorgungsleitungsstruktur übertragen.

Gemäß noch einer weiteren bevorzugten Ausführungsform der vorliegenden Erfindung wird vorgeschlagen, dass die Informationen über die Datenbusstruktur nach dem Time-Triggered Protocol (TTP) übertragen werden. Im TTP werden die Zeitfenster als der Teil des Slots (Übertragungsrahmen) bezeichnet, der zum Übertragen von stationären Daten ("State Data") dient. Als Ereignisfenster wird der Teil des Slots bezeichnet, der zur Übertragung von Ereignisdaten ("Event Data") dient. Erfindungsgemäß werden also bei TTP die in dem Teil des Slots, der zur Übertragung der "State Data" vorgesehen ist, übertragenen Informationen zumindest teilweise auch über die Versorgungsleitungsstruktur übertragen.

Als eine weitere Lösung der Aufgabe der vorliegenden Erfindung wird ausgehend von dem Kommunikationssystem gemäß dem Oberbegriff des Patentanspruchs 6 vorgeschlagen, dass das Kommunikationssystem Mittel zur redundanten Informationsübertragung umfasst, welche lediglich die in dem mindestens einen Zeitfenster über die Datenbusstruktur übertragenen Informationen zumindest teilweise auch über die Versorgungsleitungsstruktur übertragen.

Als noch eine weitere Lösung der Aufgabe der vorliegenden Erfindung wird ausgehend von dem Kommunikationssystem gemäß dem Oberbegriff des Patentanspruchs 7 vorgeschlagen, dass die Informationsübertragung über die Datenbusstruktur in aufeinanderfolgenden Zyklen erfolgt, wobei jeder Zyklus mindestens ein Zeitfenster zur Informationsübertragung zu bestimmten Zeitpunkten und mindestens ein Ereignisfenster zur Informationsübertragung zu bestimmten Ereignissen umfasst, und dass das Kommunikationssystem Mittel zur redundanten Informationsübertragung umfasst, welche zumindest einen Teil lediglich der in dem mindestens einen Zeitfenster über die Datenbusstruktur übertragenen Informationen auch über die Versorgungsleitungsstruktur übertragen.

Patentanspruch 1 und Patentanspruch 6 gehen aus von einem bekannten Kommunikationssystem, das mehrere elektrische Komponenten umfasst, die zur Energieversorgung über eine Versorgungsleitungsstruktur und darüber hinaus zur Informationsübertragung über eine Datenbusstruktur miteinander in Verbindung stehen. Die Informationsübertragung erfolgt in dem bekannten Kommunikationssystem über aufeinander folgende Kommunikationszyklen, wobei jeder Zyklus mindestens ein Zeitfenster zur zeitgesteuerten Informationsübertragung und mindestens ein Ereignisfenster zur ereignisgesteuerten Informationsübertragung aufweist. Ein derartiges Kommunikationssystem ist beispielsweise ein TTCAN-Kommunikationssystem, ein FlexRay-Kommunikationssystem oder ein TTP/C-Kommunikationssystem. Ausgehend von einem solchen Kommunikationssystem wird vorgeschlagen, dass zwischen den Komponenten zu übertragende Informationen außer über die Datenbusstruktur zusätzlich auch über die Versorgungsleitungsstruktur übertragen werden. Dabei müssen nicht alle über die Datenbusstruktur übertragenen Informationen auch über die Versorgungsleitungsstruktur übertragen werden, sondern lediglich die sicherheitsrelevanten und/oder zeitkritischen Informationen, die in den Zeitfenstern der Kommunikationszyklen übertragen werden.

Die Patentansprüche 2 und 7 gehen von einem bekannten Kommunikationssystem aus, das mehrere elektrische Komponenten umfasst, die zur Energieversorgung an eine Versorgungsleitungsstruktur und zur Informationsübertragung an eine Datenbusstruktur angeschlossen sind. Die Informationsübertragung innerhalb des bekannten Kommunikationssystems erfolgt zumindest teilweise sowohl über die Datenbusstruktur als auch über die Versorgungsleitungsstruktur. Ein derartiges Kommunikationssystem ist beispielsweise aus der DE 101 42 408 A1 bekannt, wo ein Kommunikationssystem beschrieben ist, bei dem die Informationen sowohl über die Datenbusstruktur als auch über die Versorgungsleitungsstruktur übertragen werden. Eine solche Art der Datenübertragung wird auch als Powerline Communications (PLC) bezeichnet, was Datenübertragung über die Versorgungsleitungsstruktur bedeutet. Im Unterschied zu dem bekannten Kommunikationssystem erfolgt die Informationsübertragung über die Datenbusstruktur erfindungsgemäß in aufeinanderfolgenden Zyklen, wobei jeder Zyklus mindestens ein Zeitfenster zur zeitgesteuerten Informationsübertragung und mindestens ein Ereignisfenster zur ereignisgesteuerten Informationsübertragung umfasst. Außerdem müssen erfindungsgemäß nicht alle über die Datenbusstruktur übertragenen Informationen auch über die Versorgungsleitungsstruktur übertragen werden, sondern lediglich die sicherheitsrelevanten und/oder zeitkritischen Informationen, die in den Zeitfenstern über die Datenbusstruktur übertragen werden.

Gemäß verschiedenen vorteilhaften Weiterbildungen des erfindungsgemäßen Kommunikationssystems erfolgt die Informationsübertragung über die Datenbusstruktur nach dem Time-Triggered Controller Area Network (TTCAN)-Protokoll, nach dem FlexRay-Protokoll und/oder nach dem Time-Triggered Protocol (TTP), insbesondere nach der Version C des TTP-Protokolls (TTP/C).

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung. Es zeigen:
- Figur 1: ein erfindungsgemäßes Kommunikationssystem gemäß einer bevorzugten Ausführungsform;
- Figur 2: einen FlexRay-Kommunikationszyklus; und
- Figur 3: eine TTCAN-Systemmatrix.

### Beschreibung der Ausführungsbeispiele

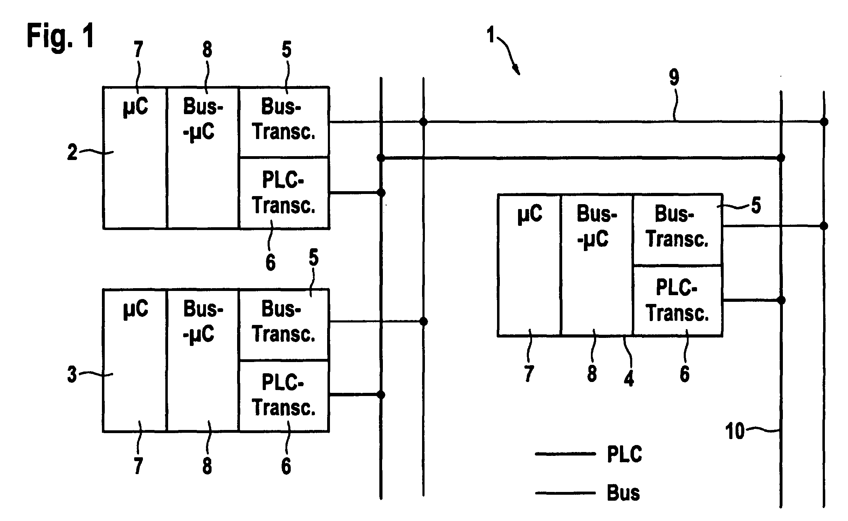

In Figur 1 ist ein erfindungsgemäßes Kommunikationssystem in seiner Gesamtheit mit dem Bezugszeichen 1 bezeichnet. Das Kommunikationssystem 1 umfasst mehrere elektrische Komponenten 2, 3, 4 eines Kraftfahrzeugs. Die elektrischen Komponenten 2, 3, 4 sind beispielsweise Steuergeräte für beliebige Kraftfahrzeugfunktionen, insbesondere Steuergeräte für sicherheitsrelevante Anwendungen in einem Kraftfahrzeug, wie beispielsweise für eine Brennkraftmaschine, einen Triebstrang, ein Bremssystem oder beliebig andere sogenannte X-By-Wire-Anwendungen. Als elektrische Komponenten 2, 3, 4 im Sinne der vorliegenden Erfindung werden aber auch hydraulische, pneumatische oder beliebig andere Komponenten bezeichnet, die elektrisch ansteuerbar sind.

Das Kommunikationssystem 1 umfasst des Weiteren eine Datenbusstruktur 9, an die die Komponenten 2, 3, 4 zur Informationsübertragung zwischen den Komponenten 2, 3, 4 angeschlossen sind. Die Informationsübertragung über die Datenbusstruktur 9 erfolgt in aufeinanderfolgenden Zyklen. Jeder Zyklus umfasst mindestens ein Zeitfenster zur zeitgesteuerten Informationsübertragung von zeitkritischen und/oder sicherheitsrelevanten Informationen und mindestens ein Ereignisfenster zur ereignisgesteuerten Informationsübertragung. Solche Datenbusstrukturen sind an sich aus dem Stand der Technik bekannt. Die Informationsübertragung über die bekannten. Datenbusstrukturen erfolgt beispielsweise nach dem sogenannten FlexRay-Protokoll, nach dem TTCAN (Time Triggered Controller Area Network)-Protokoll, nach dem MOST (Media Oriented Systems Transport)-Protokoll oder aber nach dem sogenannten TTP (Time Triggered Protocol), insbesondere nach dem TTP/C-Protokoll. Die Komponenten 2, 3, 4 sind außerdem an eine Versorgungsleitungsstruktur 10 angeschlossen, über die die Komponenten 2, 3, 4 mit elektrischer Energie versorgt werden.

Erfindungsgemäß werden die zwischen den Komponenten 2, 3,4 des Kommunikationssystems 1 übertragenen Informationen nicht nur über die Datenbusstruktur 9, sondern teilweise auch über die Versorgungsleitungsstruktur 10 übertragen. Es werden lediglich diejenigen Informationen auch über die Versorgungsleitungsstruktur übertragen, die in den Zeitfenstern über die Datenbusstruktur 9 übertragen werden. Das sind in der Regel die zeitkritischen und/oder sicherheitsrelevanten Informationen, die beispielsweise zum ordnungsgemäßen Betrieb von X-By-Wire-Anwendungen erforderlich sind. Weniger sicherheitsrelevante Informationen, beispielsweise von Komfortfunktionen des Kraftfahrzeugs oder gelegentlich auftretende Sensorsignale, werden dagegen in den Ereignisfenstern lediglich über die Datenbusstruktur 9, nicht jedoch auch über die Versorgungsleitungsstruktur 10 übertragen.

Erfindungsgemäß wird also ein einfach aufgebautes und kostengünstiges Kommunikationssystem 1 vorgeschlagen, bei dem zur Aufrechterhaltung sicherheitsrelevanter Funktionen eine teilredundante Informationsübertragung über die Datenbusstruktur 9 und über die Versorgungsleitungsstruktur 10 erfolgt. Es werden jedoch nur diejenigen Informationen auch über die Versorgungsleitungsstruktur 10 übertragen, die für eine ordnungsgemäße Funktion der sicherheitsrelevanten Anwendung unbedingt erforderlich sind. Dadurch kann selbst nach Ausfall der Datenbusstruktur 9 eine ordnungsgemäße Funktion der sicherheitsrelevanten Anwendung in dem Kraftfahrzeug gewährleistet werden, sei es auch nur eine Notlauffunktion.

Durch die Beschränkung der über die Versorgungsleitungsstruktur 10 übertragenen Informationen auf die sicherheitsrelevanten Informationen, die in den Zeitfenstern über die Datenbusstruktur 9 übertragen werden, wird die Datenmenge der über die Versorgungsleitungsstruktur 10 zu übertragenden Informationen verringert. Dadurch ist es möglich, die Übertragungsrate für die Versorgungsleitungsstruktur 10 gegenüber der Übertragungsrate für die Datenbusstruktur 9 ohne Informationsverluste zu reduzieren. Das kann insbesondere dann erforderlich sein, wenn aufgrund von Störungen in der Versorgungsleitungsstruktur 10 die dort erzielbare maximale Übertragungsrate geringer ist als die über die Datenbusstruktur 9 erzielbare Übertragungsrate. Die Übertragung von Informationen über die Versorgungsleitungsstruktur 10 wird auch als Powerline Communications (PLC) bezeichnet.

Die Kraftfahrzeugkomponenten 2, 3, 4 umfassen einen Bus-Transceiver 5 zum Senden von Informationen an andere elektrische Komponenten 2, 3, 4 über die Datenbusstruktur 9 und zum Empfangen von Informationen von anderen elektrischen Komponenten 2, 3, 4 über die Datenbusstruktur 9. Außerdem weisen die Komponenten 2, 3, 4 jeweils einen PLC-Transceiver 6 zum Senden von Informationen an andere elektrische Komponenten 2, 3, 4 über die Versorgungsleitungsstruktur 10 und zum Empfangen von Informationen von anderen elektrischen Komponenten 2, 3, 4 über die Versorgungsleitungsstruktur 10 auf. Die Komponenten 2, 3, 4 umfassen außerdem ein Rechengerät 7, insbesondere einen Mikroprozessor beziehungsweise einen Mikrocontroller, auf dem ein Steuerprogramm zur Ausführung der Funktionen, beispielsweise der Steuerungs- oder Regelungsfunktionen, der Komponenten 2, 3, 4 ablauffähig ist. Schließlich umfassen die Komponenten 2, 3, 4 ein weiteres Rechengerät 8 zur Steuerung der Informationsübertragung über die Sende-/ Empfangseinheiten (Transceiver) 5 und 6. Das weitere Rechengerät 8 dient zur Entlastung des Rechengeräts 7. Die beiden Rechengeräte 7 und 8 können jedoch auch zu einem einzigen, gemeinsamen Rechengerät zusammengefasst werden. Das Rechengerät 8 wird in der Regel als Communication-Controller und das Rechengerät 7 als Host (für die Applikationen) bezeichnet. Dahinter steckt die Philosophie, dass sich ein Host nicht mit der Kommunikations-Basis-Funtionalität des Communication-Controllers befassen müssen soll.

Zur Realisierung der Informationsübertragung über die Versorgungsleitungsstruktur 10 sollte diese entsprechend konditioniert werden, um Störungen möglichst gering zu halten und um höhere Übertragungsraten erzielen zu können. Die Konditionierung der Versorgungsleitungsstruktur 10 umfasst beispielsweise das Verdrillen der einzelnen Versorgungsleitungen der Versorgungsleitungsstruktur 10, die Verwendung von modifizierten, aktiven Sternpunkten und den Einsatz von Ferriten sowohl zur Entkopplung als auch - in Form von sogenannten PLC-Kopplern - zur Ein- und Auskopplung eines hochfrequenten, modulierten Trägersignals zur Informationsübertragung. Eine entsprechende Konditionierung der Versorgungsleitungsstruktur 10 kann der DE 101 42 409 A1 und der DE 101 42 410 A1 entnommen werden, auf die diesbezüglich ausdrücklich verwiesen wird.

Für die Realisierung der vorliegenden Erfindung ist eine Informationsübertragung über die Datenbusstruktur 9 gemäß dem FlexRay-Übertragungsprotokoll besonders geeignet, da dieses Protokoll bereits einen Mehrkanalbetrieb ermöglicht, wobei bei der vorliegenden Erfindung ein Kanal zur Informationsübertragung über die Datenbusstruktur 9 und ein weiterer Kanal zur Informationsübertragung über die Versorgungsleitungsstruktur 10 genutzt werden kann. Andere Übertragungsprotokolle, die zunächst lediglich einen Einkanalbetrieb unterstützen, können mit relativ geringem Aufwand dahingehend erweitert werden, dass sie ebenfalls einen Mehrkanalbetrieb unterstützen. Außerdem ist das FlexRay-Protokoll besonders geeignet, da es vorsieht, dass sämtliche Komponenten des Kommunikationssystems an die Versorgungsleitungsstruktur angeschlossen werden, wodurch ohne zusätzlichen Verbindungsaufwand jede der Komponenten mittels der redundanten Informationsübertragung über die Versorgungsleitungsstruktur erreicht werden kann. Die physikalische Schicht des Kommunikationssystems kann elektrisch oder optisch ausgebildet sein.

Zur Realisierung des erfindungsgemäßen Verfahrens werden die in den Zeitfenstern über die Datenbusstruktur 9 übertragenen Informationen sowohl über die Bus-Transceiver 5 als auch zumindest teilweise über die PLC-Transceiver 6 geführt. Die PLC-Transceiver 6 modulieren das zu übertragende Informationssignal und demodulieren das empfangene modulierte Informationssignal. Das modulierte Informationssignal wird über einen PLC-Koppler auf die verdrillten Versorgungsleitungen (Batteriespannung U_{Batt} und Masse GND) induktiv eingekoppelt, symmetrisch übertragen und empfängerseitig über die genannten PLC-Koppler ausgekoppelt. Bei den PLC-Kopplern verwendeten Ferrite werden zur hochfrequenten Entkopplung aller Komponenten 2, 3, 4 des Kommunikationssystems 1 auf der relevanten Versorgungsleitung eingesetzt und gewährleisten dadurch einen an den Wellenwiderstand der Übertragungsstrecke angepassten, über die gesamte Übertragungsbandbreite konstanten Abschluss (vergleiche DE 101 42 409 A1). Diese Maßnahmen sind abhängig von der erzielbaren Datenrate, der Trägerfrequenz, der Leitungslänge, Netzstruktur und anderen Parametern zwar sehr empfohlen, aber nicht zwingend notwendig. Für eine sogenannte High Date Rate (HDR)-PLC-Informationsübertragung sind die beschriebenen Maßnahmen jedoch erforderlich.

Eine bevorzugte Netztopologie für die vorzugsweise eingesetzte HDR-PLC-Informationsübertragung ist die Sternstruktur (vergleiche DE 101 42 410 A1). Es werden modifizierte, den Gleichstrom nicht beeinflussende Sternpunkte verwendet. Hier bietet sich wiederum die Verwendung von Ferriten an, da diese für eine Frequenz von f = 0 Hz keinen Widerstandswert aufweisen. Aus diesem Grund werden für die Serienwiderstände Z_{Serie} Doppellochkern-Ferrite zur Erzeugung frequenzabhängiger Widerstände verwendet. Da durch die passiven Sternpunkte das geträgerte Informationssignal einer hohen Signaldämpfung unterworfen ist, werden die Sternpunkte vorzugsweise aktiv ausgelegt. Das geträgerte Informationssignal wird vor dem niederimpedanten Sternpunkt über PLC-Koppler ausgekoppelt. Das Informationssignal wird mittels Treiberstufen (bidirektional, halbduplex, d. h. das Signal darf nicht auf den ursprünglichen Pfad eingekoppelt werden) jenseits des Sternpunktes wieder über PLC-Koppler auf die jeweiligen Pfade verteilt. Optional kann für die Treiberstufe eine Verstärkerstufe oder auch ein kompletter Transceiver eingesetzt werden.

2*Z_{Serie}/2 entspricht bei aktiver Auslegung der Sternpunkte durch die zusätzlich eingebrachte kapazitive Kopplung der Sternpunkte (zwischen Sternpunkt U_{Batt} und Sternpunkt GND) nicht mehr Z_{Serie} bei passiver Auslegung (vergleiche DE 101 42 410 A1). Für aktive Sternpunkte muss nunmehr Z_{Serie} = Z_{L} gelten, wobei Z_{Serie} die Serienwiderstände und Z_{L} die Wellenwiderstände sind, mit denen die Leitungsabzweige abgeschlossen sind.

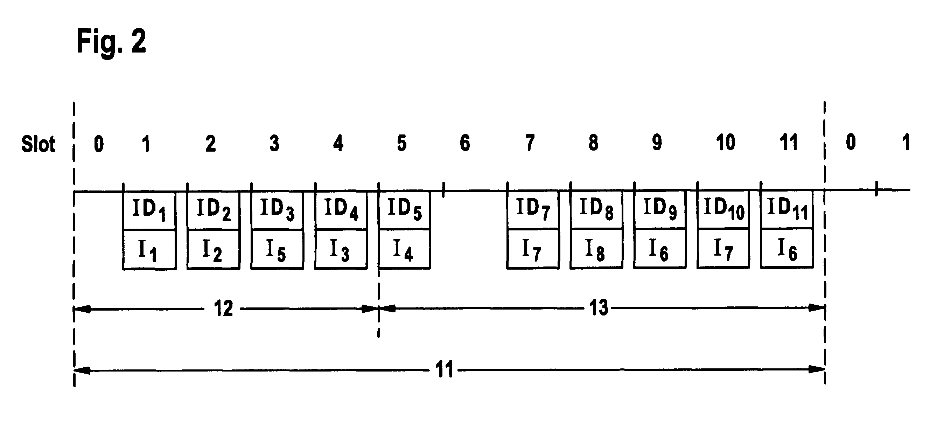

In Figur 2 ist ein Kommunikationszyklus nach dem FlexRay-Protokoll beispielhaft dargestellt. Der Zyklus ist in seiner Gesamtheit mit dem Bezugszeichen 11 bezeichnet. Der Zyklus 11 umfasst ein statisches Segment 12 und ein dynamisches Segment 13. Außer den hier dargestellten Segmenten 12 und 13 kann der Zyklus 11 auch weitere Segmente, beispielsweise ein Symbolfenster (Symbol Window) oder eine sogenannte Network Idle Time (NIT) umfassen. Der Kommunikationszyklus 11 wiederholt sich periodisch. Das statische Segment 12 umfasst mindestens zwei statische Schlitze (Static Slots), in dem vorliegenden Beispiel vier Static Slots. Innerhalb des statischen Segments 12 wird ein statisches Time Division Multiple Access (TDMA)-Schema angewandt, um die verschiedenen Informationsübertragungen zu koordinieren. In dem statischen Segment 12 weisen alle Schlitze die gleiche, statisch vorgegebene Dauer auf, und alle Nachrichten (Frames), die die zu übertragenden Informationen beinhalten, weisen die gleiche, statisch vorgegebene Länge auf.

In dem Ausführungsbeispiel aus Figur 2 ist der Kommunikationszyklus 11 in zwölf Slots unterteilt, wobei die Schlitze 0 bis 4 dem statischen Segment 12 und die Schlitze 6 bis 11 dem dynamischen Segment 13 zugeordnet sind. Die in den Schlitzen 1 bis 4 zu übertragenden Nachrichten sind mittels ihrer Kennung ID₁ bis ID₄ den entsprechenden Schlitzen #1 bis #4 zugeordnet. Die in den Nachrichten enthaltenen Informationen sind mit I₁ bis I₃ und I₅ bezeichnet.

Das dynamische Segment 13 des Zyklus 11 ist in eine vorgebbare Anzahl von Minischlitzen (Mini Slots) von gleicher Dauer unterteilt. Außerdem umfasst das dynamische Segment 13 eine vorgebbare Anzahl an dynamischen Schlitzen (Dynamic Slots), die einen oder mehrere Minischlitze umfassen. Die Dauer eines dynamischen Schlitzes hängt davon ab, ob eine Kommunikation, das heißt die Übertragung oder der Empfang einer Nachricht erfolgt oder nicht. Die Dauer eines dynamischen Schlitzes wird für jeden Kanal gesondert festgelegt. Am Ende eines jeden Minischlitzes wird überprüft, ob eine Kommunikation stattfindet oder nicht. Falls keine Kommunikation stattfindet, umfasst der dynamische Schlitz lediglich einen Minischlitz, das heißt der entsprechende Kommunikationskanal befindet sich im Leerlauf während des gesamten Minischlitzes. Der dynamische Schlitz umfasst mehrere Minischlitze, falls eine Kommunikation stattfindet.

Ganz allgemein kann festgehalten werden, dass die Komponenten 2, 3, 4 die Möglichkeit haben, innerhalb des dynamischen Segments 13 ereignisgesteuert Informationen zu übertragen. Es wird also gewissermaßen in jedem Zyklus 11 eine gewisse Übertragungsdauer, das heißt eine bestimmte Anzahl von Schlitzen, für eine ereignisgesteuerte Informationsübertragung reserviert. Falls während des Zyklus 11 ein Ereignis eintritt, das eine Informationsübertragung auslöst, kann die entsprechende Information während des dynamischen Segments 13 dieses oder eines nachfolgenden Zyklus 11 übertragen werden. Falls jedoch in dem Zyklus 11 keine ereignisgesteuerte Informationsübertragung stattfindet, bleibt das dynamische Segment 13 in diesem Zyklus 11 ungenutzt (vergleiche Slot #6). In dem vorliegenden Ausführungsbeispiel von Figur 2 werden in dem dynamischen Segment Nachrichten ID₅ bis ID₁₁ mit den Informationen I₄ und I₆ bis I₈ übertragen.

Erfindungsgemäß werden bei dem in Figur 2 dargestellten Ausführungsbeispiel nicht alle Nachrichten ID₁ bis ID₁₁, sondern lediglich die Nachrichten ID₁ bis ID₄ zusätzlich zu der Übertragung über die Datenbusstruktur 9 auch über die Versorgungsleitungsstruktur 10 übertragen.

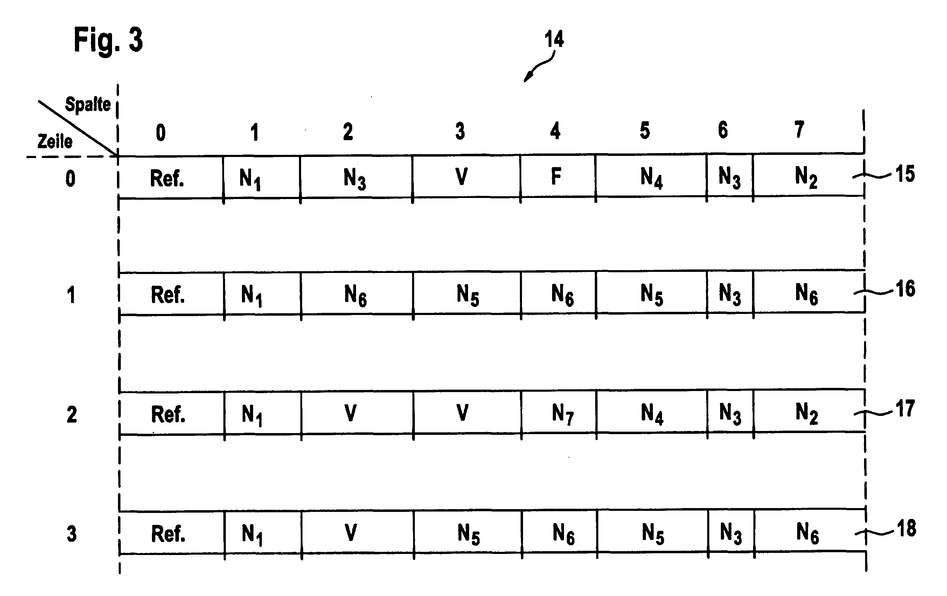

In Figur 3 ist eine sogenannte Systemmatrix, wie sie bei einer Informationsübertragung nach dem TTCAN-Protokoll Anwendung findet, in ihrer Gesamtheit mit dem Bezugszeichen 14 bezeichnet. Die Systemmatrix 14 umfasst mehrere Zeilen #0 bis #3, wobei jede Zeile einem Grundzyklus (Basic Cycle) 15 bis 18 entspricht. Jeder Zyklus 15 bis 18 ist in eine bestimmte Anzahl an Zeitfenstern (Time Windows) unterteilt. Die Anzahl und Dauer der einzelnen Zeitfenster kann innerhalb eines Zyklus 15 bis 18 variieren, ist jedoch für jeden Zyklus 15 bis 18 gleich. In dem Ausführungsbeispiel aus Figur 3 ist jeder Zyklus 15 bis 18 in acht Zeitfenster #0 bis #7 unterteilt.

Gemäß dem TTCAN-Protokoll gibt es verschiedene Arten von Zeitfenstern. Die Art eines Zeitfensters kann von Zyklus zu Zyklus unterschiedlich gewählt werden. So gibt es beispielsweise exklusive Zeitfenster (sogenannte Exclusive Time Windows) Nᵢ, die bestimmten Nachrichten Nᵢ zugeordnet sind, die periodisch ohne einen Wettbewerb um die Zugriffsrechte auf die Datenbusstruktur 9 übertragen werden. Außerdem gibt es vermittelnde Zeitfenster (sogenannte Arbitrating Time Windows) V, die zur ereignisgesteuerten Informationsübertragung eingesetzt werden können. Schließlich gibt es auch sogenannte freie Zeitfenster (Free Time Windows) F, durch die die Systemmatrix 14 ohne großen Aufwand an eine erweiterte Kommunikations- oder Netzwerkstruktur angepasst werden kann. Die ursprünglich freien Zeitfenster können dann bei einer Erweiterung des Kommunikationssystems 1 um weitere Komponenten oder bei einer zusätzlichen Informationsübertragung der bestehenden Komponenten 2, 3, 4 für die zusätzliche Informationsübertragung genutzt werden.

Innerhalb der exklusiven Zeitfenster Nᵢ werden die Informationen also zeitgesteuert übertragen. Die vermittelnden Zeitfenster V werden für eine ereignisgesteuerte Informationsübertragung innerhalb eines Zyklus 15 bis 18 eingesetzt.

Erfindungsgemäß werden bei dem in Figur 3 dargestellten Ausführungsbeispiel nicht alle Nachrichten, sondern lediglich die Nachrichten N₁ bis N₇, die in den Zeitfenstern (Exclusive Windows) über die Datenbusstruktur 9 übertragen werden, zusätzlich zu der Übertragung über die Datenbusstruktur 9 auch über die Versorgungsleitungsstruktur 10 übertragen.

## Patentansprüche

1. Verfahren zur Übertragung von Informationen in einem Kraftfahrzeug zwischen elektrischen Komponenten (2, 3, 4) des Kraftfahrzeugs, die zur Informationsübertragung an eine Datenbusstruktur (9) des Kraftfahrzeugs und zur Energieversorgung an eine Versorgungsleitungsstruktur (10) des Kraftfahrzeugs angeschlossenen sind, wobei die Informationen in aufeinander folgenden Zyklen über die Datenbusstruktur (9) übertragen werden, wobei jeder Zyklus mindestens ein Zeitfenster zur Informationsübertragung zu bestimmten Zeitpunkten und mindestens ein Ereignisfenster zur Informationsübertragung zu bestimmten Ereignissen umfasst, **dadurch gekennzeichnet, dass** lediglich die in dem mindestens einen Zeitfenster über die Datenbusstruktur (9) übertragenen Informationen zur redundanten Informationsübertragung zumindest teilweise auch über die Versorgungsleitungsstruktur (10) übertragen werden.

2. Verfahren nach Anspruch 1, **dadurch gekennzeichnet, dass** die Informationen über die Datenbusstruktur (9) nach dem Time Triggered Controller Area Network, nachfolgend TTCAN, -Protokoll übertragen werden.

3. Verfahren nach Anspruch 1, **dadurch gekennzeichnet, dass** die Informationen über die Datenbusstruktur (9) nach dem FlexRay-Protokoll übertragen werden.

4. Verfahren nach Anspruch 1,**dadurch gekennzeichnet, dass** die Informationen über die Datenbusstruktur (9) nach dem Time Triggered Protocol, nachfolgend TTP, übertragen werden.

5. Kommunikationssystem (1) für ein Kraftfahrzeug, umfassend mehrere elektrische Komponenten (2, 3, 4), eine Datenbusstruktur (9), an welche die Komponenten (2, 3, 4) zur Informationsübertragung zwischen den Komponenten (2, 3, 4) angeschlossen sind, und eine Versorgungsleitungsstruktur (10), an welche die Komponenten (2, 3, 4) zur Energieversorgung angeschlossen sind, wobei die Informationsübertragung über die Datenbusstruktur (9) in aufeinander folgenden Zyklen erfolgt, wobei jeder Zyklus mindestens ein Zeitfenster zur Informationsübertragung zu bestimmten Zeitpunkten und mindestens ein Ereignisfenster zur Informationsübertragung zu bestimmten Ereignissen umfasst, **dadurch gekennzeichnet, dass** das Kommunikationssystem (1) Mittel zur redundanten Informationsübertragung umfasst, welche lediglich die in dem mindestens einen Zeitfenster über die Datenbusstruktur (9) übertragenen Informationen zumindest teilweise auch über die Versorgungsleitungsstruktur (10) übertragen.

6. Kommunikationssystem (1) nach Anspruch 5, **dadurch gekennzeichnet, dass** die Informationsübertragung über die Datenbusstruktur (9) nach dem Time Triggered Controller Area Network, nachfolgend TTCAN, -Protokoll erfolgt.

7. Kommunikationssystem (1) nach Anspruch 5, **dadurch gekennzeichnet, dass** die Informationsübertragung über die Datenbusstruktur (9) nach dem FlexRay-Protokoll erfolgt.

8. Kommunikationssystem (1) nach Anspruch 5, **dadurch gekennzeichnet, dass** die Informationsübertragung über die Datenbusstruktur (9) nach dem Time Triggered Protocol, nachfolgende TTP, erfolgt.

## Claims

1. Method for transmitting information in a motor vehicle between electric components (2, 3, 4) of the motor vehicle which are connected to a data bus structure (9) in a motor vehicle for the purpose of transmitting information and to a supply line structure (10) in the motor vehicle for the purpose of supplying power, wherein the information is transmitted via the data bus structure (9) in successive cycles, wherein each cycle comprises at least one time window for transmitting information at particular times and at least one event window for transmitting information at particular events, **characterized in that** only the information transmitted via the data bus structure (9) in the at least one time window is also transmitted at least in part via the supply line structure (10) for the purpose of redundant information transmission.

2. Method according to Claim 1, **characterized in that** the information is transmitted via the data bus structure (9) on the basis of the Time Triggered Controller Area Network, subsequently TTCAN, protocol.

3. Method according to Claim 1, **characterized in that** the information is transmitted via the data bus structure (9) on the basis of the FlexRay protocol.

4. Method according to Claim 1, **characterized in that** the information is transmitted via the data bus structure (9) on the basis of the Time Triggered Protocol, subsequently TTP.

5. Communication system (1) for a motor vehicle, comprising a plurality of electric components (2, 3, 4), a data bus structure (9) to which the components (2, 3, 4) are connected for the purpose of transmitting information between the components (2, 3, 4), and a supply line structure (10) to which the components (2, 3, 4) are connected for the purpose of supplying power, wherein the information is transmitted via the data bus structure (9) in successive cycles, wherein each cycle comprises at least one time window for transmitting information at particular times and at least one event window for transmitting information at particular events, **characterized in that** the communication system (1) comprises means for redundant information transmission which also transmit only the information transmitted via the data bus structure (9) in the at least one time window at least in part via the supply line structure (10).

6. Communication system (1) according to Claim 5, **characterized in that** the information is transmitted via the data bus structure (9) on the basis of the Time Triggered Controller Area Network, subsequently TTCAN, protocol.

7. Communication system (1) according to Claim 5, **characterized in that** the information is transmitted via the data bus structure (9) on the basis of the FlexRay protocol.

8. Communication system (1) according to Claim 5, **characterized in that** the information is transmitted via the data bus structure (9) on the basis of the Time Triggered Protocol, subsequently TTP.

## Revendications

1. Procédé de transmission d'informations dans un véhicule automobile entre des composants électriques (2, 3, 4) du véhicule automobile, lesquels sont raccordés à une structure de bus de données (9) du véhicule automobile pour la transmission d'informations et à une structure de lignes d'alimentation (10) du véhicule automobile pour l'alimentation en énergie, les informations étant transmises dans des cycles successifs sur la structure de bus de données (9), chaque cycle incluant au moins une fenêtre de temps pour la transmission d'informations à des instants donnés et au moins une fenêtre d'événement pour la transmission d'informations en présence d'événements donnés, **caractérisé en ce que** seules les informations qui sont transmises sur la structure de bus de données (9) dans l'au moins une fenêtre de temps sont au moins partiellement aussi transmises sur la structure de lignes d'alimentation (10) en vue d'une transmission redondante des informations.

2. Procédé selon la revendication 1, **caractérisé en ce que** les informations sont transmises sur la structure de bus de données (9) conformément au protocole Time Triggered Controller Area Network (Réseau de zone de contrôleur déclenché par le temps), appelé ci-après TTCAN.

3. Procédé selon la revendication 1, **caractérisé en ce que** les informations sont transmises sur la structure de bus de données (9) conformément au protocole FlexRay.

4. Procédé selon la revendication 1, **caractérisé en ce que** les informations sont transmises sur la structure de bus de données (9) conformément au protocole Time Triggered Protocol (Protocole déclenché par le temps), appelé ci-après TTP.

5. Système de communication (1) pour un véhicule automobile comprenant plusieurs composants électriques (2, 3, 4), une structure de bus de données (9) à laquelle sont raccordés les composants (2, 3, 4) pour la transmission d'informations entre les composants (2, 3, 4) et une structure de lignes d'alimentation (10) à laquelle sont raccordés les composants (2, 3, 4) pour l'alimentation en énergie, la transmission d'informations s'effectuant sur la structure de bus de données (9) dans des cycles successifs, chaque cycle incluant au moins une fenêtre de temps pour la transmission d'informations à des instants donnés et au moins une fenêtre d'événement pour la transmission d'informations en présence d'événements donnés, **caractérisé en ce que** le système de communication (1) comprend des moyens de transmission redondante des informations, lesquels transmettent aussi au moins partiellement sur la structure de lignes d'alimentation (10) uniquement les informations qui sont transmises sur la structure de bus de données (9) dans l'au moins une fenêtre de temps.

6. Système de communication (1) selon la revendication 5, **caractérisé en ce que** la transmission d'informations sur la structure de bus de données (9) s'effectue conformément au protocole Time Triggered Controller Area Network (Réseau de zone de contrôleur déclenché par le temps), appelé ci-après TTCAN.

7. Système de communication (1) selon la revendication 5, **caractérisé en ce que** la transmission d'informations sur la structure de bus de données (9) s'effectue conformément au protocole FlexRay.

8. Système de communication (1) selon la revendication 5, **caractérisé en ce que** la transmission d'informations sur la structure de bus de données (9) s'effectue conformément au protocole Time Triggered Protocol (Protocole déclenché par le temps), appelé ci-après TTP.
